Europäisches Patentamt

European Patent Office

Office européen des brevets

(19)

(11) Veröffentlichungsnummer : **0 434 666 A1**

(12) **EUROPÄISCHE PATENTANMELDUNG**

(21) Anmeldenummer : 90890351.1

(22) Anmeldetag : 21.12.90

(51) Int. Cl.⁵ : **H02K 19/38, H02K 19/36, H02P 9/14**

(30) Priorität : 22.12.89 AT 2925/89
15.05.90 AT 1072/90

(43) Veröffentlichungstag der Anmeldung :
26.06.91 Patentblatt 91/26

(84) Benannte Vertragsstaaten :
AT BE CH DE DK ES FR GB GR IT LI LU NL SE

(71) Anmelder : Elin Energieversorgung
Gesellschaft m.b.H.
Penzinger Strasse 76
A-1140 Wien (AT)

(72) Erfinder : Fischmann, Walter
Hochmaisgasse 31
A-1130 Wien (AT)

(74) Vertreter : Krause, Peter
Penzinger Strasse 76
A-1141 Wien (AT)

(54) **Elektrische Maschine und Schaltrad zum Umschalten von Rotorwicklungen.**

(57)    Die Erfindung befaßt sich mit einer bürstenlosen Außenpol-Wechselstrommaschine, welche als Erregermaschine für verschiedene Typen von Synchronmaschinen einsetzbar ist, sowie mit einem zugehörigen Schaltrad zum Umschalten komplizierter Rotorwicklungen.

Erfindungsgemäß ist die Rotorwicklung (6) mit einem oder mehreren parallelen Wicklungszweigen (14) pro Phase ausgeführt. Die Wicklungsanfänge und -enden der Teilspulen (20 bis 31) der parallelen Wicklungszweige (14) sind den Anschlußkontakten (32 bis 47 und 78 bis 83) eines am Rotor angeordneten Schaltrades (9) zugeführt und zur jeweils benötigten Anzahl von zueinander parallelen Wicklungszweigen (14) zusammenschaltbar.
(Fig. 1 - 6)

Das erfindungsgemäße Schaltrad weist am äußeren Umfang, nahe einer Stirnseite des Rotors (100), zentrisch und radial zur Rotorwelle, einen mit dem Rotorkörper starr verbundener Ringkörper (106) auf. Am Ringkörper (106) sind, entsprechend der Anzahl der Rotorwicklungsanfänge und -enden (110), Anschlußbolzen (107) in axialer Richtung angeordnet, welche mit den Rotorwicklungsanfängen und -enden (110) leitend verbunden sind.
(Fig. 7 u. 8)

Fig. 7

EP 0 434 666 A1

Fig. 1

Fig. 2

# ELEKTRISCHE MASCHINE UND SCHALTRAD ZUM UMSCHALTEN VON ROTORWICKLUNGEN

Die Erfindung betrifft eine elektrische Maschine, insbesonders eine bürstenlose Außenpol-Wechselstrommaschine mit mitrotierendem Gleichrichter, sowie ein Schaltrad zum Umschalten von Rotorwicklungen.

Die Stromerzeugung erfolgt heutzutage meist mit bürstenlosen Synchrongeneratoren. Dabei wird ein als Innenpolmaschine ausgeführter Hauptgenerator verwendet, bei welchem die erzeugte elektrische Energie vorteilhafterweise von der ruhenden Ständerwicklung abgenommen werden kann.

Es sind Anordnungen bekannt, bei denen die Erregerwicklung des Generators von einer fremden Gleichstromquelle gespeist wird. Bei größeren Anlagen wird jedoch üblicherweise der Erregerstrom von einer als Außenpolmaschine ausgeführten Haupterregermaschine entnommen. Meist versorgt eine Hilfserregermaschine mit Dauermagnetpolrad die Erregerwicklung der Haupterregermaschine. Selbstverständlich könnte statt einer Hilferregermaschine auch eine fremde Gleichstromquelle herangezogen werden. In der Praxis ist dies jedoch kaum üblich, weil nur ein Erregersatz mit Haupt- und Hilfserregermaschine einen autarken Einsatz bei der Energieerzeugung mittels eines Synchrongenerators sicherstellt.

Die Wechselstromausleitungen der Erregermaschine werden einer aus mitrotierenden Dioden bestehenden Gleichrichterschaltung zugeführt. Bei bürstenlosen Hauptgeneratoren erfolgt von der Gleichrichterschaltung die Anspeisung der Polradwicklung des Hauptgenerators mit Gleichstrom über Kupferschienen oder ein Kabel.

Als Haupterregermaschinen werden zu diesem Zweck Wechselstrom-Synchronmaschinen eingesetzt. Der Anker dieser Maschinen besitzt üblicherweise eine Drehstromwicklung, die Erregung des Hauptmagnetfeldes erfolgt durch eine Gleichstromwicklung. Im vorliegenden Fall handelt es sich um eine Außenpolmaschine, das heißt, der Stator trägt die Feldwicklung, der Rotor die Ankerwicklung. Dadurch kann die ruhende Feldwicklung der Haupterregermaschine bürstenlos mit Gleichstrom gespeist werden. In der rotierenden Ankerwicklung der Haupterregermaschine entsteht eine Wechselspannung. Diese Wechselspannung wird, bevor sie dem Polrad des Generators zugeführt wird, von einem mitrotierenden Gleichrichter gleichgerichtet.

Da jeder Synchrongenerator eine genau seiner Type entsprechende Erregermaschine benötigt, war es bisher notwendig, daß für Anlagen mit verschiedenen Typen von Synchrongeneratoren auch entsprechend viele verschiedene Typen von Erregermaschinen auf Lager gehalten werden mußten. Nur dadurch war es möglich, schadhafte Erregermaschinen rasch gegen funktionierende auszutauschen. Eine derartige Lagerhaltung ist äußerst kostspielig. Daraus ergibt sich als noch gravierenderer Nachteil, daß meist — wiederum aus Kostengründen — für jede jeweils verwendete Synchrongeneratortype lediglich eine Erregermaschine des entsprechenden Typs auf Lager gehalten wird. Fällt eine in Betrieb befindliche Ersatzerregermaschine aus, bevor die zuvor ausgefallene Erregermaschine repariert werden kann, so kommt es zu einem längeren Stillstand der Stromerzeugung.

Ein weiteres Problem stellt die Umschaltung von Rotorwicklungen elektrischer Maschinen dar. Vor allem bei Spezialmaschinen mit komplizierten umschaltbaren Rotorwicklungen ist es bei manchen Betriebseinsätzen erforderlich, zur optimalen Ausnutzung der Maschine die Wicklungen relativ oft umzuschalten.

Bisher wurden, bis zu einem beschränkten wirtschaftlichen Leistungsbereich und bei üblichen Drehzahlen, solche Maschinen mit einem oder mehreren Anschlußkästen ausgeführt, wobei die Wicklungsanfänge und -enden zu Anschlußbolzen geführt wurden, welche übereinander oder nebeneinander oder verschachtelt angeordnet waren. Durch entsprechende Verbindungsänderungen mittels Verbindungslaschen wurden dabei die Wicklungsanfänge und -enden entsprechend zusammengeschaltet.

Nachteilig bei dieser Art von Umschaltung ist, daß durch die große Anzahl von jeweils durchzuführenden Schaltverbindungen sehr viele Verbindungslaschen einander kreuzen und die jeweiligen Schaltungen unübersichtlich sind.

Aufgabe der Erfindung ist es, einerseits eine Erregermaschine zu schaffen, welche zur Erregung mehrerer verschiedener Typen von Synchronmaschinen einsetzbar ist, und anderseits eine Einrichtung zu schaffen, mit welcher das Umschalten von komplizierten Rotorwicklungen elektrischer Maschinen, unter Vermeidung der bekannten Nachteile, möglich ist.

Die Aufgabe wird durch die Erfindung gelöst. Diese ist dadurch gekennzeichnet, daß die Rotorwicklung mit einem oder mehreren parallelen Wicklungszweigen pro Phase ausgeführt ist, und daß die Wicklungsanfänge und Wicklungsenden der Teilspulen der parallelen Wicklungszweige den Anschlußkontakten eines am Rotor angeordneten Schaltrades zugeführt sind, wobei die Teilspulen am Schaltrad mittels Verbindungsbügeln zur jeweils benötigten Anzahl von zueinander parallelen Wicklungszweigen zusammenschaltbar sind.

Mit der erfindungsgemäßen elektrischen Maschine ist es erstmals möglich, eine einzige Erregermaschinentype für mehrere verschiedene Synchrongeneratortypen zu deren Felderregung einzusetzen, ohne daß Eingriffe ins Innere der Erregermaschine vorgenommen werden müssen. Die Erregermaschine ist mit einfachsten Mitteln, nämlich durch Änderung der Verbindungen am Schaltrad, derart umschaltbar, daß sie jeweils verschiedene, der jeweils verwendeten Synchrongeneratortype entsprechende, Kennwerte aufweist.

Es wird dadurch nicht nur die Lagerhaltung für Ersatz-Erregermaschinen erleichtert und verbilligt, auch die Durchführung von Reparaturen an Erregermaschinen wird einfacher, weil das zuständige Fachpersonal nur mehr eine oder zumindest wenige verschiedene Typen zu reparieren imstande sein muß. Für Betreiber mehrerer, örtlich auseinanderliegender Stromerzeugungsanlagen mit jeweils verschiedenen Typen von Synchrongeneratoren ermöglicht es die Erfindung, daß in einem einzigen Zentrallager einige wenige oder auch nur eine einzige Type von Eregermaschinen zur Verfügung gehalten werden müssen.

Vorteilhaft ist weiters, daß die Erfindung auf die genormten, handelsüblichen Maschinenkonstruktionen anwendbar ist.

In einer Weiterbildung der Erfindung sind die entsprechend der jeweiligen Auslegung der elektrischen Maschine benötigten Wicklungsanfänge und Wicklungsenden der Teilspulen der parallelen Wicklungszweige den Anschlußkontakten des Schaltrades zugeführt.

Dadurch ist es möglich, bei Wicklungen mit einer größeren Anzahl von parallelen Wicklungszweigen die Kontaktanordnung am Schaltrad stark zu vereinfachen.

Eine Ausbildung der Erfindung besteht darin, daß auf beiden Stirnseiten des Rotors ein Schaltrad zum Umschalten der Rotorwicklung vorgesehen ist.

Daraus ergibt sich der Vorteil, daß bei komplizierten Wicklungen die Kontaktaufteilung so durchgeführt werden kann, daß auf jedem Schaltrad eine einfache Schaltungsänderung mittels der Verbindungsbügel möglich ist.

Im Rahmen der Erfindung ist ein Schaltrad vorgesehen, welchem am äußeren Umfang, versenkt und vorzugsweise nahe eier Stirnseite des Rotors, zentrisch und radial zur Rotorwelle, ein mit dem Rotorkörper starr verbundener Ringkörper angeordnet ist, wobei der Ringkörper, entsprechend der Anzahl der Rotorwicklungsanfänge und -enden, Bohrungen und Anschlußbolzen in axialer Richtung aufweist, und wobei die Rotorwicklungsanfänge und -enden mit den Anschlußbolzen leitend verbunden sind.

Mit diesem erfindungsgemäßen Schaltrad ist es möglich, komplizierte Rotorwicklungen rasch und übersichtlich umzuschalten.

In einer Weiterbildung der Erfindung weist der Ringkörper auf der der Stirnseite zugewandten Seite einen Innen-oder Außenkragen auf.

Mit Hilfe des Kragens ist es möglich, das erfindungsgemäße Schaltrad problemlos am Rotorkörper zu befestigen.

Eine Ausgestaltung der Erfindung besteht darin, daß der Ringkörper mehrteilig ausgeführt ist.

Damit wird, vor allem bei Großmaschinen, die Montage das Schaltrad wesentlich erleichtert.

Ein besonderes Merkmal der Erfindung besteht darin, daß am äußeren Umfang des Ringkörpers ein ringförmiger, mit Lüftungsausnehmungen versehener, Berührungsschutz angeordnet ist.

Dadurch wird das unbeabsichtigte Berühren von elektrisch leitenden Teilen verhindert und gleichzeitig vermieden, daß sich zwischen Ringkörper und Berührungsschutz ein Wärmestau bildet.

An Hand eines Ausführungsbeispieles soll die Erfindung näher erläutert werden. Dabei zeigt Fig. 1, in Form eines Prinzipschaltbildes, die Anordnung eines Generators sowie einer auf derselben Welle wie der Generator aufgesetzten Erregermaschine. In Fig. 2 ist das erfindungsgemäße Wicklungs-Prinzip stark schematisiert dargestellt. Die Fig. 3 bis 6 zeigen vier konkrete Ausführungsmöglichkeiten für eine bestimmte Rotorwicklung. Aus Fig. 7 kann der Rotor einer Drehstrom-Erregermaschine mit einem erfindungsgemäßen Schaltrad ersehen werden, während Fig. 8 das Schaltrad im Detail darstellt.

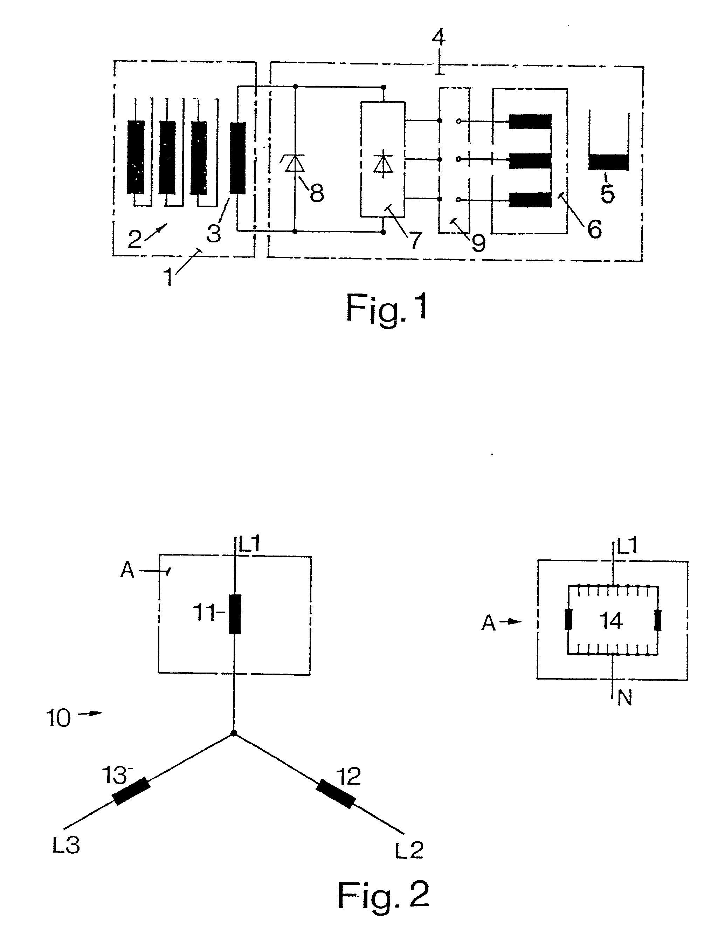

Wie in Fig. 1 ersichtlich, weist ein Drehstrom-Synchrongenerator 1 in bekannter Weise einen Stator mit einer ein Drehstromnetz speisenden Drehstromwicklung 2 auf. Eine Feldwicklung 3 des Drehstrom-Synchrongenerators 1 wird über einen Gleichrichter 7 von einer Drehstrom-Erregermaschine 4 mit Gleichstrom gespeist. Die Gleichrichter-Anordnung 7 enthält einen Überspannungsbegrenzer 8 zum Schutz der Gleichrichterdioden gegen periodisch auftretende, durch den Träger-Speicher-Effekt verursachte Spannungsspitzen. Die Drehstrom-Erregermaschine 4 weist eine Stator-Feldwicklung 5 und eine Rotordrehstromwicklung 6 sowie ein Schaltrad 9 samt Umschalteinrichtung auf.

Die Spannungsregelung der Drehstrom-Erregermaschine 4 erfolgt über einen im Feldstromkreis liegenden Spannungsregler (in Fig. 1 ist dies nicht dargestellt).

Sämtliche rotierende Teile der Drehstrom-Erregermaschine 4 sind auf einer Nabe montiert und werden erst im fertig montierten Zustand auf die Welle des Drehstrom-Synchrongenerators 1 aufgesetzt. Durch Verwendung von entsprechenden Nabenhülsen ist die Drehstrom-Erregermaschine für unterschiedliche Drehstrom-Synchrongeneratoren 1 einsetzbar.

Die Nabe des Rotors der Drehstrom-Erregermaschine 4 ist eine aus Stahlblech bestehende Schweißkonstruktion, auf deren Armen das Rotorblechpaket aufgezogen ist. Das Rotorblechpaket ist mit Druckplatten in axialer Richtung gepreßt. Zur besseren Kühlung ist das Rotorblechpaket in einige Teilpakete unterteilt.

Die Rotorwicklung der Drehstrom-Erregermaschine 4 ist im vorliegenden Beispiel als dreiphasige Drehstromwicklung mit mehrfach parallelen Zweigen und herausgeführtem Sternpunkt geschaltet und ist in die Nuten des geblechten Rotors eingelegt. Die Realisierung der erforderlichen Parallelschaltung der Rotorwicklung — die Drehstrom-Erregermaschine 4 ist dadurch für unterschiedliche Drehstrom-Synchrongeneratoren 1 verwendbar — erfolgt im Stillstand durch Umklemmen des am Läufer angeordneten Schaltrades 9. Die Wickelköpfe der Rotorwicklung werden durch Polyglasbandagen gehalten. Die Drehstromausleitungen werden über das Schaltrad 9 zum Gleichrichter 7 geführt. Der Halbleiter-Gleichrichter 7, welcher in einem Leichtmetall-Kühlkörper eingelassen ist, wird isoliert auf dem Gleichrichterrad montiert.

Vom einem Plus- bzw. einem Minus- Sammelring der Gleichrichterschaltung wird der Gleichstrom über Kupferschienen oder Kabel der Polradwicklung 3 des bürstenlosen Drehstrom-Synchrongenerators 1 zugeführt. Zur Erfassung von Erdschlüssen in den rotierenden Teilen werden Hilfsschleifringe angebracht (diese sind in den Fig. nicht dargestellt). Für Strom- und Spannungsmessung bei der Inbetriebnahme sind demontierbare Hilfsschleifringe vorgesehen.

Die Kühlung der Drehstrom-Erregermaschine erfolgt mit Frischluft. Die Luftumwälzung wird durch einen auf der Erregernabe montierten Lüfter hervorgerufen.

In Fig. 2 ist eine in Stern geschaltete Drehstromwicklung 10 einer bürstenlosen Außenpol-DrehstromErregermaschine 4 dargestellt. Die Phasenwicklungen 11, 12, 13 bestehen dabei, wie im Detail A ersichtlich, aus jeweils mehreren parallelen Zweigen 14.

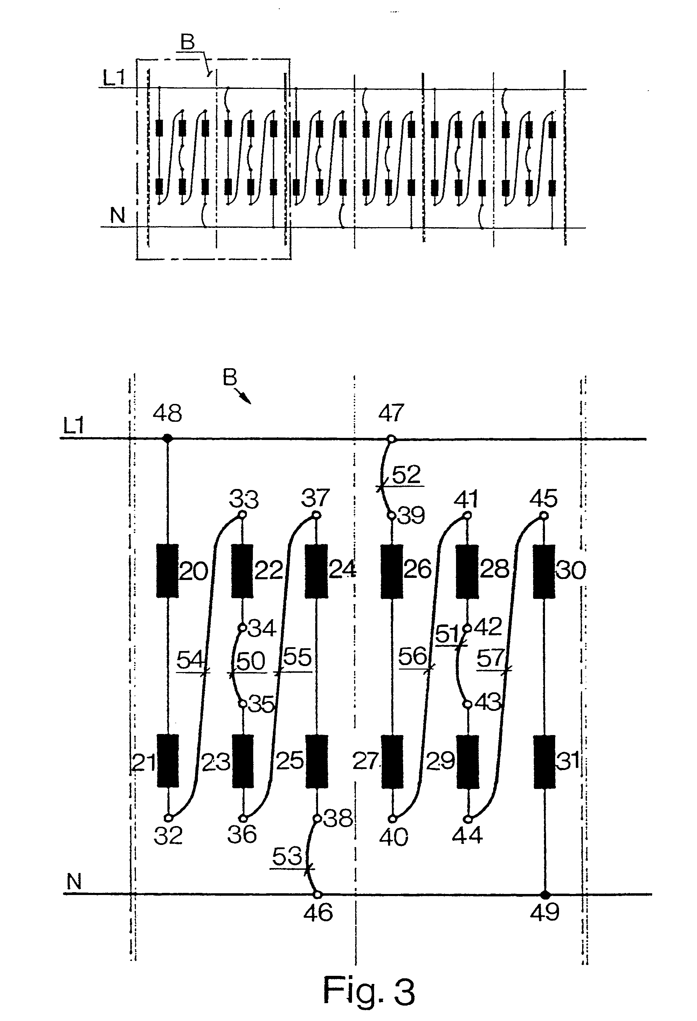

Konkret zeigt Fig. 3 eine in Stern geschaltete, 36polige Rotorwicklung für eine bürstenlose Außenpol-Drehstrom-Erregermaschine, wobei pro Phase 36 Teilspulen vorgesehen sind. Es ist eine Schaltungsanordung gewählt, mittels derer für die Wicklungsumschaltung möglichst wenige Anschlußkontakte notwendig sind und möglichst einfache Verbindungen durchzuführen sind. Zu diesem Zweck sind im vorliegenden Fall lediglich jene Wicklungsanfänge und Wicklungsenden der Teilspulen 20 bis 31 den Anschlußkontakten 32 bis 45 des am Rotor der Erregermaschine 4 angeordneten Schaltrades 9 zugeführt, welche für einen bestimmten Typ einer erfindungsgemäßen Drehstrom-Erregermaschine 4 tatsächlich bei einer Umschaltung umgeklemmt werden müssen. Im vorliegenden Fall ist angenommen, daß die Drehstrom-Erregermaschine 4 für 6, 9, 12, und 18 parallele Zweige pro Phase schaltbar sein muß. Aus diesem Grund sind die Teilspulen 20 u. 21 bzw. 24 u. 25 bzw. 26 u. 27 bzw. 30 u. 31 jeweils betriebsmäßig nicht lösbar miteinander verbunden ; aus demselben Grund besteht zwischen dem Wicklungsanfang der Teilspule 20 und dem Phasenanschluß L1 bzw. zwischen dem Wicklungsende der Teilspule 31 und dem Nulleiter jeweils eine betriebsmäßig nicht lösbare Verbindung 48 bzw. 49.

Die betriebsmäßig lösbaren Verbindungen sind als geschwungene Linien dargestellt, das sind für die in Fig. 3 dargestellte Wicklungsschaltung, für 6 Wicklungszweige pro Phase, die Verbindungen 50 bis 57.

Diese für 3 Nuten pro Pol und Phase ausgelegte Wicklung kann, durch jeweils geringfügige Änderung der betriebsmäßig lösbaren Verbindungen, umgeschaltet werden.

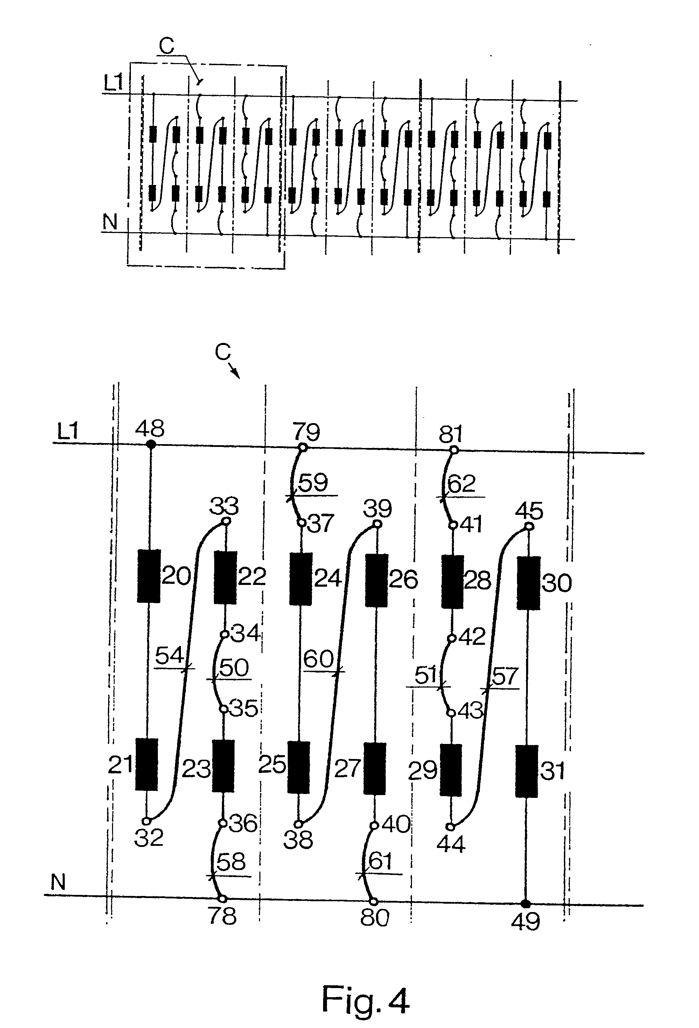

Soll die Wicklung von — wie in Fig. 3 oben komplett dargestellt — 6 parallelen Wicklungszweigen pro Phase auf — wie in Fig. 4 oben komplett dargstellt — 9 parallele Wicklungszweige pro Phase umgeschaltet werden, so können die Verbindungsbügel 50, 51, 54 und 57 belassen werden ; es sind lediglich die Verbindungsbügel 52, 53, 55 und 56 zu entfernen, und die Verbindungsbügel 58 bis 62 anzuschließen.

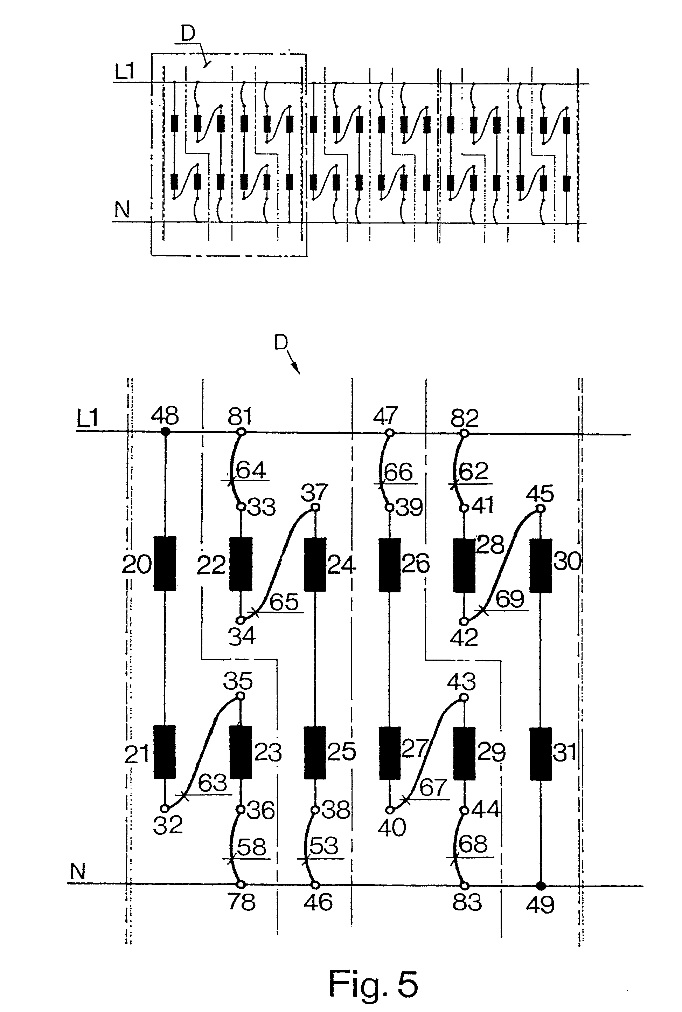

Soll die Wicklung von — wie in Fig. 4 oben komplett dargestellt — 9 parallelen Wicklungszweigen pro Phase auf — wie in Fig. 5 oben komplett dargestellt — 12 parallele Wicklungszweige pro Phase umgeschaltet werden, so können die Verbindungsbügel 58 und 62 belassen werden ; es sind lediglich die Verbindungsbügel 50, 51, 54, 57, 59, 60 und 61 zu entfernen, und die Verbindungsbügel 63 bis 69 anzuschließen.

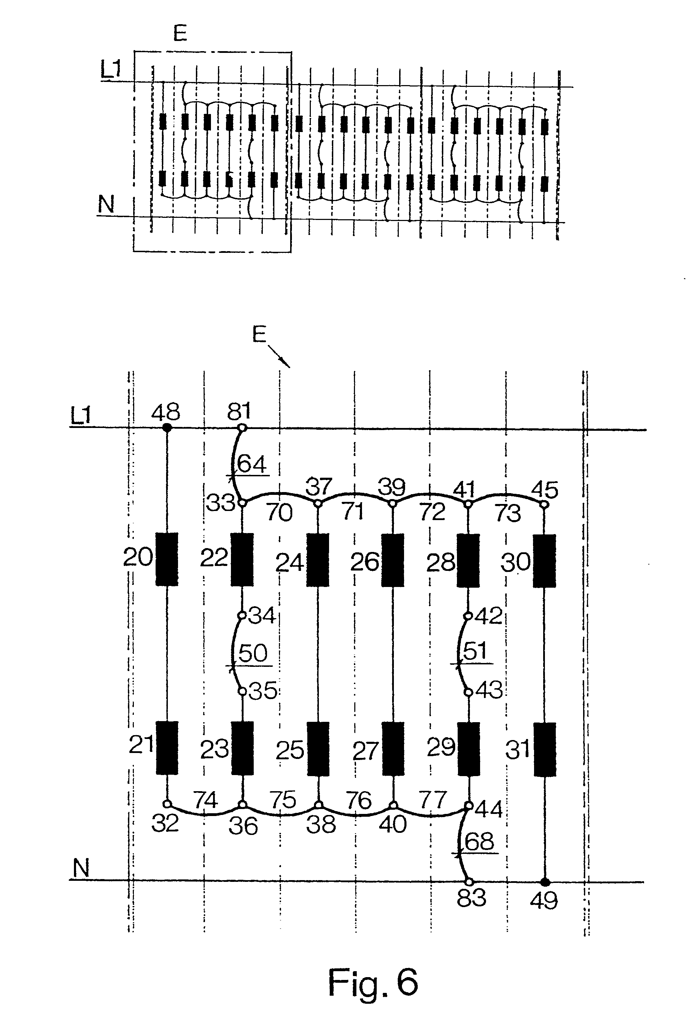

Soll die Wicklung von — wie in Fig. 5 oben komplett dargestellt — 12 parallelen Wicklungszweigen pro Phase auf — wie in Fig. 6 oben komplett dargestellt — 18 parallele Wicklungszweige pro Phase umgeschaltet werden, so können die Verbindungsbügel 64 und 68 belassen werden ; es sind lediglich die Verbindungsbügel 53, 58, 63, 65, 66, 67, und 69 zu entfernen, und die Verbindungsbügel 70 bis 77 anzuschließen.

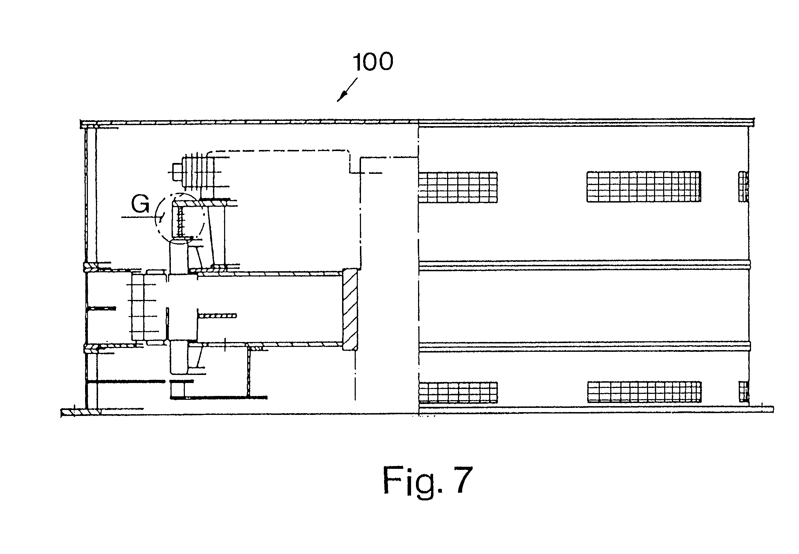

In Fig. 7 ist mit "G" die Plazierung des erfindungsgemäßen Schaltrades am Rotor einer Wechselstrommaschine bezeichnet.

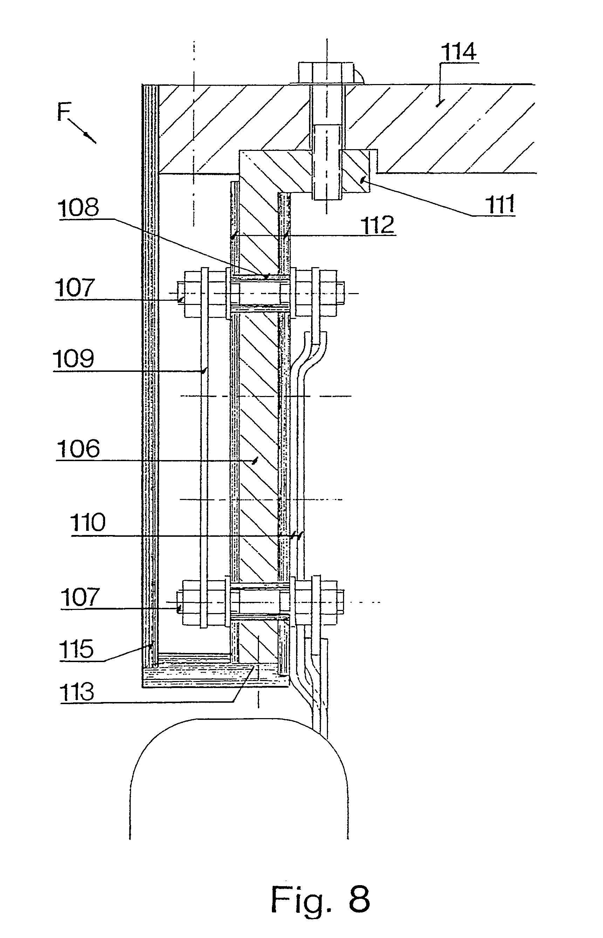

Wie Fig. 8 im Detail zeigt, besteht das erfindungsgemäße Schaltrad aus einem Ringkörper 106 mit einem der Rotorwelle zugewandten schmalen Kragen 111. Der Ringkörper 106 ist starr mit dem Rotorkörper verbunden, und zwar einerseits durch Fixierung in einer Nut 113, und anderseits durch eine Schraubverbindung einer Stirnplatte 114 mit dem Kragen 111.

Der Ringkörper 106 weist Bohrungen in axialer Richtung, in denen Anschlußbolzen 107 angeordnet sind. Mittels Isolierhülsen 108 und Isolierplatten 112 ist bei Verwendung elektrisch leitenden Materials für den Ringkörper 106 die gegenseitige Isolierung leitender Teile gewährleistet.

An der der Rotorwelle zugewandten Seite des Ringkörpers 106 sind Rotorwicklungsanfänge und -enden 110 mit Anschlußbolzen 107 leitend verbunden. Die jeweils notwendigen Schaltungen der Rotorwicklung werden durch Einsetzen oder Entfernen von Verbindungsbügeln 109 durchgeführt.

Durch Aufbringen eines Berührungsschutzes 115 wird verhindert, daß leitende Teile, also die Anschlußbolzen 107 und die Verbindungsbügel 109, unabsichtlich berührt werden können. Der Berührungsschutz 115 ist mit Ausnehmungen versehen, so daß ein Wärmestau zwischen ebendiesem Berührungsschutz 115 und dem Ringkörper 106 verhindert wird.

Die Rotorwicklung der Drehstrom-Erregermaschine ist im vorliegenden Beispiel als dreiphasige Drehstromwicklung mit mehrfach parallelen Zweigen und herausgeführtem Sternpunkt geschaltet und ist in die Nuten eines geblechten Rotors eingelegt. Die Realisierung der erforderlichen Parallelschaltung der Rotorwicklung — die Drehstrom-Erregermaschine ist dadurch für unterschiedliche Drehstrom-Synchrongeneratoren verwendbar — erfolgt im Stillstand durch Umklemmen auf der am Läufer angeordneten Schaltrad.

**Ansprüche**

1.  Elektrische Maschine, insbesonders bürstenlose Außenpol-Wechselstrommaschine (4) mit mitrotierendem Gleichrichter (7), **dadurch gekennzeichnet**, daß die Rotorwicklung (6) mit einem oder mehreren parallelen Wicklungszweigen (14) pro Phase ausgeführt ist, und daß die Wicklungsanfänge und Wicklungsenden der Teilspulen (20 bis 31) der parallelen Wicklungszweige (14) den Anschlußkontakten (32 bis 47 und 78 bis 83) eines am Rotor angeordneten Schaltrades (9) zugeführt sind, wobei die Teilspulen (20 bis 31) am Schaltrad (9) mittels Verbindungsbügeln (50 bis 77) zur jeweils benötigten Anzahl von zueinander parallelen Wicklungszweigen (14) zusammenschaltbar sind.
    (Fig. 1 - 6)

2.  Elektrische Maschine nach Anspruch 1, **dadurch gekennzeichnet**, daß die entsprechend der jeweiligen Auslegung der elektrischen Maschine benötigten Wicklungsanfänge und Wicklungsenden der Teilspulen (22 bis 31) der parallelen Wicklungszweige (14) den Anschlußkontakten (32 bis 47 und 78 bis 83) des Schaltrades (9) zugeführt sind.
    (Fig. 1 - 6)

3.  Elektrische Maschine nach Anspruch 1 oder 2, **dadurch gekennzeichnet**, daß auf beiden Stirnseiten des Rotors ein Schaltrad (9) zum Umschalten der Rotorwicklung vorgesehen ist.

4.  Schaltrad zum Umschalten der Rotorwicklung, **dadurch gekennzeichnet**, daß am äußeren Umfang, versenkt und vorzugsweise nahe einer Stirnseite des Rotors (100), zentrisch und radial zur Rotorwelle, ein mit dem Rotorkörper starr verbundener Ringkörper (106) angeordnet ist, und daß der Ringkörper (106), entsprechend der Anzahl der Rotorwicklungsanfänge und -enden (110), Bohrungen und Anschlußbolzen (107) in axialer Richtung aufweist, wobei die Rotorwicklungsanfänge und -enden (110) mit den Anschlußbolzen (107) leitend verbunden sind.
    (Fig. 6 u. 7)

5.  Schaltrad nach Anspruch 4, **dadurch gekennzeichnet**, daß der Ringkörper (106) auf der der Stirnseite zugewandten Seite einen Innen- oder Außenkragen (111) aufweist.
    (Fig. 7)

6.  Schaltrad nach Anspruch 4 oder 5, **dadurch gekennzeichnet**, daß der Ringkörper (106) mehrteilig ausgeführt ist.
    (Fig.7)

7.  Schaltrad nach einem der Ansprüche 4 bis 6, **dadurch gekennzeichnet**, daß am äußeren Umfang des Ringkörpers (106) ein ringförmiger, mit Lüftungsausnehmungen versehener, Berührungsschutz (115) angeordnet ist.
    (Fig. 7)

## Fig. 1

## Fig. 2

Fig. 3

Fig. 4

Fig. 5

Fig. 6

Fig. 7

EP 0 434 666 A1

Fig. 8

Europäisches
Patentamt

**EUROPÄISCHER RECHERCHENBERICHT**

Nummer der Anmeldung

EP    90 89 0351

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-1513927 (LICENTIA) <br> * Seite 4, Zeilen 1 - 19; Figur 1. * | 1, 2. | H02K19/38 <br> H02K19/36 |
| A | | 3-7. | H02P9/14 |
| Y | NL-A-6610070 (SIEMENS-SCHUCKERT) <br> * Seite 2, Zeile 3 - Seite 5, Zeile 26; Figuren 1, 2. * | 1, 2. | |
| A | CH-A-526881 (ELIN) <br> * Spalte 5, Zeile 17 - Spalte 6, Zeile 28; Figuren 3-9. * | 1. | |
| A | CH-A-444285 (LICENTIA) <br> * Spalte 4, Zeilen 13 - 29; Figur * | 1. | |
| A | SOVIET INVENTIONS ILLUSTRATED, Woche D32, 16 September 1981, Derwent, London, GB, & SU-A-771814 (KHARKOV). <br> *das ganze Dokument* | 1. | |

**RECHERCHIERTE SACHGEBIETE (Int. Cl.5)**

H02K
H02P

Der vorliegende Recherchenbericht wurde für alle Patentansprüche erstellt

| Recherchenort | Abschlußdatum der Recherche | Prüfer |
|---|---|---|
| DEN HAAG | 25 FEBRUAR 1991 | TIO K.H. |

EPO FORM 1503 03.82 (P0403)